Europäisches Patentamt

European Patent Office

Office européen des brevets

(11) Publication number: **0 439 898 A2**

## EUROPEAN PATENT APPLICATION

(21) Application number: 90309712.9

(22) Date of filing: 05.09.90

(51) Int. Cl.⁵: **B29C 63/06**, B29D 23/22, //B29K27:18,B29L23:22

(30) Priority: 29.01.90 US 471794

(43) Date of publication of application: 07.08.91 Bulletin 91/32

(84) Designated Contracting States: DE ES FR GB IT

(71) Applicant: **TELEFLEX INCORPORATED** 155 S. Limerick Road Limerick Pennsylvania 19468(US)

(72) Inventor: **Green, Edward A.** 10497 S. Main Street Mantua, Ohio 44255(US) Inventor: **Murray, James H.** 855 N. Pemberton Bloomfield Hills, Michigan 48013(US)

(74) Representative: **Browne, Robin Forsythe et al Urquhart-Dykes & Lord Tower House Merrion Way Leeds LS2 8PA West Yorkshire(GB)**

(54) Method of producing a pre-coat conduit.

(57) A method for forming a hose assembly (10) of the type for carrying fluids. The method includes the step of extruding an inner liner (16) from a fluorocarbon polymer. A fibrous braided material (18) is provided. Each fiber of the braided material (18) is coated with an aqueous fluorocarbon polymer solution. After the fiber has been coated, it is braided about the exterior of the inner liner (16) to form a braided layer (18). The assembly (10) is dried in a drying oven by removing the solvent. Once the solvent has been removed, an outer fluorocarbon polymer coating (20) remains about each fiber in the braided layer (18). The assembly (10) is then sintered to cure the outer coating (20). An end fitting (14) may then be secured to either of the ends of the inner liner (16).

EP 0 439 898 A2

## METHOD OF PRODUCING A PRE-COAT CONDUIT

TECHNICAL FIELD

The present invention relates to a method for making a hose assembly of the type particularly well adapted for carrying vehicle fuels.

BACKGROUND ART

Hose assemblies used to carry vehicle fuels are well known in the art. The hose is preferably strong and resistant to both heat and chemical degradation. These hoses are subject to chemical breakdown by various fluids which flow through them. Further, these hoses are typically routed through the engine compartment of the vehicle to deliver fuel to the vehicle engine. These engines are hot and, thus, the hoses used to carry the fuels are subject to breakdown or degradation from the heat.

TEFLON hoses provide the necessary physical properties for carrying fuels. A major problem with these types of hoses is that when used alone, i.e., only a TEFLON liner or conduit, they tend to get bent or kinked during installation or use. This kink or deformation remains permanent and provides constant resistance to fluid flow through the hose. To solve this problem, it is known to put a braided or woven nonmetallic material about the TEFLON liner. One such hose is described in copending application United States Serial Number 305,643, filed Feb. 2, 1989 and assigned to the assignee of the subject invention. The assembly includes an inner fluorocarbon polymer liner. A glass fiber is braided or woven about the exterior of the inner liner. A fluorocarbon polymer solution is then disbursed into the woven fibers. The solvent is then removed from the solution, such as by drying in an oven, and the hose is sintered at an elevated temperature to cure the fluorocarbon polymer. what remains is a hose assembly having an inner liner, a glass fiber braided layer which has an organic polymeric material disbursed throughout the braided material. The method of making this hose is further disclosed. The method comprises the step of providing an inner liner and braiding a material about the inner liner. Once the material is braided or woven about the inner liner, an aqueous solution of a fluorocarbon polymer is disbursed into the fibers.

Although this method produces an effective hose assembly, some of the aqueous solution is filtered by the woven or braided material and does not reach the inner liner as the solution is dispersed into the braided material. This limits the bond or adhesion between the woven material and the inner liner.

SUMMARY OF THE INVENTION AND ADVANTAGES

According to the present invention, there is provided a method of forming a hose assembly comprising the steps of providing an organic polymeric liner and applying a braided material about the exterior of the inner liner. The method is characterized by coating the braided material with an organic polymeric solution prior to applying the braided material about the exterior of the inner liner.

Accordingly, there is provided a method for constructing a hose assembly which substantially increases the bonding between the fiber material and the inner liner. This results in a strong hose assembly which resists relative movement between the fibers and the inner liner.

FIGURES IN THE DRAWINGS

Other advantages of the present invention will be readily appreciated as the same becomes better understood by reference to the following detailed description when considered in connection with the accompanying drawings wherein:

Figure 1 is a perspective view of the preferred embodiment of the instant invention;

Figure 2 is an enlarged sectional view of the hose assembly; and

Figure 3 is a side view partially broken away from the preferred embodiment of the instant invention including a coupling member.

DETAILED DESCRIPTION OF THE DRAWINGS

A hose assembly made in accordance with the method of the instant invention is generally shown at 10 in the Figures.

The assembly 10 includes a tubular member generally indicated at 12. The assembly 10 further includes a coupling means or assembly generally indicated at 14 (as best viewed in Figure 3). The coupling assembly 14 is for connecting the ends of the tubular member 12 to mating fittings (not shown) for conducting fluid therethrough.

The tubular member 12 includes an inner organic polymeric liner 16. The inner liner 16 is extruded and has a wall thickness of between .001 inches and .120 inches. The inner liner 16 is preferably made of a fluorocarbon polymer. Specifically, the inner liner is made of the polymer of tetrafluoroethylene (PTFE), the polymer of fluorinated ethylene propylene (FEP), the polymer of perfluoroalkoxy resin (PFA) or the polymer of ethelyne-tetrafluroethylene (ETFE). The fluorocarbon polymers PTFE, FEP, PFA are sold under the trademark TEFLON by DuPont. The polymer ETFE is sold under the trademark TEFZEL by DuPont.

The inner liner 16 is impervious to fluid flow through the wall thereof. Since the inner liner 16 is preferably made of a fluorocarbon polymer material, as previously described, it is resistant to both heat and chemical degradation. This allows a variety of fluids, particularly corrosive materials, such as vehicle fuels, to pass through the interior of the liner 12 without corroding or chemically degrading the liner 16.

The assembly 10 further includes a braided or woven layer 18 about the exterior of the liner 16. The braided or woven layer 18 can comprise any nonmetallic material disposed in interleaving fashion about the inner liner 16. Alternatively, the material may be wrapped tightly about the inner liner 16, such that fibers are immediately adjacent each other when wrapped with little or no gap between adjacent fibers. Preferably, the material to be used to form the braided layer 18 is glass fiber. Glass fibers provide the necessary strength for supporting the inner liner 16. Further, glass fibers are heat resistant, which is important for use in heated environments, such as automobiles. The braided fibers may be tightly woven or they may be loosely woven in interleaving fashion having wide gaps between adjacent fibers. In the preferred embodiment, the glass fibers are tightly wound such that the gaps or spaces between adjacent fibers are minimal. The braided layer 18 adds to both the hoop strength and the burst strength of the inner liner 16. Particularly, by using a braided layer 18, a higher pressure fluid can flow through the inner liner 16. The braided layer also prevents kinking of the inner liner 16 upon bending the tubular member 12. Further, the braided layer 18 adds to the tensile strength of the hose assembly 10. When the coupling assembly 14 is disposed at the end of the tubular member 11 the braided material 18 increases the tensile strength of the hose assembly 10 sufficiently to fixedly connect any type of coupling assembly 14 to the tubular member 12.

The braided layer 18 is preferably applied about the exterior of the inner liner 16 by utilizing a braiding machine well known in the art. The machine includes a plurality of spools which carry the fiber material. The fibers are fed through the machine to a braiding area. In the braiding area, the fibers are braided or wound about the inner liner 16 to form the braided layer 18.

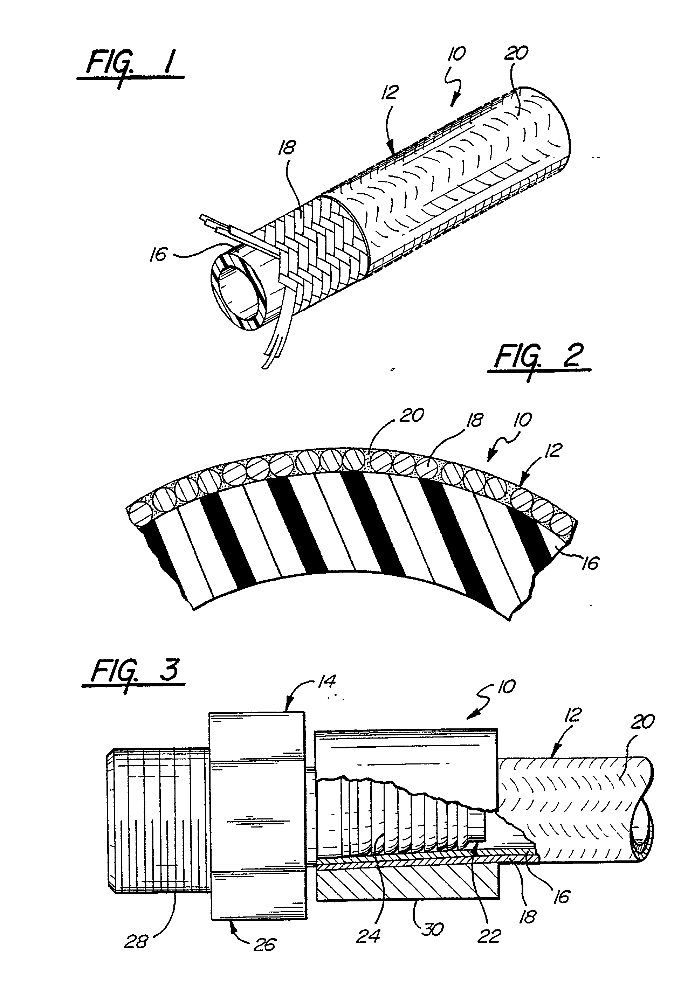

The assembly 10 further includes an organic polymeric coating 20 about the braided layer 18 (as best shown in Figure 2). More particularly, an organic polymeric material is dispersed about each of the glass fibers of the braided layer 18. The coating 20 comprises a fluorocarbon polymer. Specifically, the coating 20 preferably comprises a polymer of tetraflouroethelyne (PTFE), the polymer of flourinated ethylene propylene (FEP), the polymer of perfluoroakloxy resin (PFA), or the polymer of ethylene-tetraflouroethylene (ETFE).

The organic polymeric material coats the glass fibers of the braided layer 18. That is, when the assembly 10 is constructed in accordance with the method of the instant invention, the coating 20 covers the fibers of the braided layer 18 from the outer periphery of the layer 18 radially inwardly. The coating, therefore, preferably does not extend radially outwardly from the outer periphery of the braided material 18. Once the material has been coated, each fiber in the layer 18 is completely contained within the coating 20.

The outer coating 20 is formed by applying the organic polymeric material about the glass fibers before braiding or weaving the glass fibers about the inner liner 16. Preferably, the organic polymeric material is initially in a solution or dispersion of the fluorocarbon polymer. In other words, the coating 20, as applied, comprises the fluorocarbon polymer and at least one solvent. Preferably, the solvent is water. It will be appreciated that any suitable solvent may be utilized. The solution may further include surfactants. The fluorocarbon polymer solution or dispersion coats each individual glass fiber 18 of the braided layer 18. Specifically, the fluorocarbon polymer solution coats each fiber before the fibers are braided or woven onto the inner liner 16. In this manner, the outer periphery of each individual fiber is completely coated prior to application on the liner 16. The solvent is removed from the solution by drying after the fibers are applied about the inner liner 16. This leaves a fluorocarbon polymer material or coating 20 disbursed throughout the braided layer 18. By coating each fiber of the braided layer 18 prior to braiding or weaving the material about the liner 16, a strong bond between the fibers 18 and the liner 16 is achieved.

As previously stated, both the inner liner 16 and the coating 20 are preferably fluorocarbon polymers. It is not necessary that both the inner liner 16 and the outer coating 20 be of the same fluorocarbon polymer, although they may be. For example, the inner liner 16 may be made of PFA while the coating 20 is made of PTFE. Any combination of the fluorocarbon polymers may be utilized for the inner liner 16 and the coating 20. By utilizing similar fluorocarbon polymers, the strong bond between the inner liner 16 and the coating 20 is achieved. Furthermore, the use of a surfactant increases the bonding between the coating 20 and the inner liner 16.

The coating 20 in conjunction with the braided layer 18 allows the inner liner 16 to be bent while resisting kinking or permanently deforming. That is, the coating 20, disbursed throughout the braided layer 18, provides strength to the inner liner 16 upon bending. This is commonly referred to a hoop strength. Thus, by using a polymeric coating 20 disbursed throughout the braided layer 20, a trim profile assembly 10 is produced which results in the hoop strength of the tubular member 12 being increased so that the tubular member 12 can be bent without kinking.

Further, the outer coating 20 adds to the working pressure of the hose assembly 10. That is, the coating 20 in conjunction with the fibers 18 allows the inner liner 16 to accommodate fluids under pressure. Also, the coating 20 hinders abrasion of the tubular member 12. Said another way, the coating 14 aids in abrasion resistance of the tubular member 12 and specifically aids in abrasion resistance of the glass fibers 18. Finally, the coating 20 provides a strong bond between the braided layer 18 and the inner liner 16. That is, the coating 20 secures the braided layer 18 to the liner 16 to hinder relative movement between the braided layer 18 and the inner liner 16.

The assembly 10 includes a coupling assembly 14. The coupling assembly 14 is for connecting the tubular member 12 to a fitting (not shown). The fitting is adapted to cooperate with the coupling assembly 14. The coupling assembly 14 includes an insert portion, generally indicated at 22 for inserting into and engaging the interior of the inner liner 16. The insert portion 22 may have a plurality of barbs 24 thereon for engaging the interior of the inner liner 16 (as best viewed in Figure 3). The coupling assembly 14 further includes an engaging portion generally indicated at 26. The engaging portion 26 extends longitudinally from the insert portion 22. The engaging portion 26 may comprise a male threaded member 28 or alternatively the engaging portion 26 may comprise a female threaded portion (not shown). The engaging portion 26 may comprise any configuration adapted to cooperate with a member to which it will be fixed. For example, the engaging portion 26 may comprise a socket to receive a mating ball joint. Finally, the coupling assembly 14 includes a locking collar 30. The locking collar 30 is disposed about the exterior of the outer coating 20 and is slid until it is disposed radially over the insert portion 22 of the coupling assembly 14. In this manner, the inner liner 16 is forced into tight frictional engagement with the barbs 24 and insert portion 22 to prevent relative axial movement between the inner liner 16 and the insert portion 22. The coupling assembly 14 can be of any other well known type. For example, the coupling assembly 14 may be of an organic polymeric material and may be molded about the tubular member 12 for a mechanical connection or fusion bond.

As fluid flows through the inner liner 16, electrical charges tend to build throughout the length of the liner 16. In order to prevent these electrical charges from accumulating, the inner liner 16 has an integral longitudinal conductive means coextensive with the length of the inner liner 16 for conducting an electric charge through the liner 16. Preferably, the inner liner 16 has a strip 32 of the carbon black. This carbon black is electrically conductive and will dissipate any electrical charges built up by the fluid. Alternatively, the entire inner tubular liner 16 can comprise the conductive means. This is done by using carbon black throughout the entire inner liner 16.

The braided layer 18 and coating 20 are preferably electrically nonconductive. This is important in that an electrical charges applied to the exterior of the outer coating 20 will not be conducted through the length of the tubular member 12 or to the fluid passing to the interior of the inner liner 16. It will be appreciated that any suitable conductive material may be used to form the conductive strip 32.

The preferred method for making the assembly 10 as shown in the Figures is as follows. An inner organic polymeric liner 16 is provided. Specifically, the inner liner 16 is extruded from a fluorocarbon polymer. A nonmetallic braided material, preferably glass fiber material is provided. The braided material is coated with an organic polymeric solution by any of a variety of methods. One method is to spray the material with the organic polymeric solution. Alternatively, the coating step may comprise passing the braided material through a reservoir containing the solution. The reservoir can comprise a chamber having the solution therein, or the reservoir may comprise brushes having the solution thereon. The brushes are in continuous engagement with the fibers to coat each fiber. when a standard braiding machine is used, the fibers are coated after the fibers are taken off the spool and prior to being braided about the inner liner 16. That is, the fibers are coated in an area between the spools and braiding area.

The braided material having the organic polymer solution thereon is then applied about the exterior of the inner liner 16 by weaving or wrapping the fibers about the inner liner 16. Alternatively, the fibers may be braided to form a sock-like construction into which the inner liner 16 is placed. Again, the solution which is applied to or disposed about the glass fibers is a solution or dispersion of an organic polymeric material and at least one solvent. Preferably, the solution is an aqueous solution of a fluorocarbon polymer. The inner liner 16 having the braided layer 18 which is coated with the solution thereon is then sent to a dryer where the solvent, preferably water, is removed. The dryer comprises a preheat oven which is preferably at or below the boiling temperature of the solvent (water). By utilizing an oven below the boiling temperature of the solvent, a bubbling effect is avoided in the final hose assembly 10. The solvent (water) is removed from the solution to leave a coating 20 of an organic polymeric material disbursed throughout the braided material 18. The tubular member 12 is sintered at a suitable temperature to cure the organic polymeric coating 20. Because glass fibers are used for the braided layer they are unaffected 18, by the heat required to sinter the tubular member 12. Finally, a coupling member 14 may be secured at one or both the ends of the tubular member 12 to secure the assembly 10 to a fitting (not shown) for conducting fluid through the inner liner 16.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that within the scope of the appended claims wherein reference numerals are merely for convenience and are not to be in any way limiting, the invention may be practiced otherwise than as specifically described.

**Claims**

1. A method of forming a hose assembly comprising the steps of:
   providing an organic polymeric inner liner (16);
   applying a braided material (18) about the exterior of the inner liner (16);
   said method characterized by coating the braided material (18) with an organic polymeric solution prior to applying the braided material (18) about the exterior of the inner liner (16).

2. A method as set forth in claim 1 further characterized by coating the braided material (18) by spraying the organic polymeric solution onto the braided material (18).

3. A method as set forth in claim 1 further characterized by coating the braided material (18) by passing the braided material (18) through a reservoir of the organic polymeric solution.

4. A method as set forth in either claim 2 or 3 further characterized by utilizing an organic polymeric solution of an organic polymeric material and at least one solvent.

5. A method as set forth in claim 4 further characterized by removing the solvent to leave an organic polymeric coating (20) about the exterior of the braided material (18).

6. A method as set forth in claim 4 further characterized by sintering the inner liner (16) and braided material (18) to cure the organic polymeric material.

7. A method as set forth in claim 5 further characterized by securing at least one end fitting (14) to the inner liner (16) having the braided material (18) thereabout.

8. A method as set forth in claim 5 further characterized by utilizing a nonmetallic material for the braided material (18).

9. A method as set forth in claim 8 further characterized by utilizing glass fiber for the nonmetallic braided material (18).

10. A method as set forth in claim 8 further characterized by providing an inner liner (16) by extruding the inner liner (16).

11. A method as set forth in claim 10 further characterized by utilizing a fluorocarbon polymer as the organic polymeric material.

12. A method as set forth in claim 11 further characterized by utilizing water as the solvent to form an aqueous organic polymeric solution.

13. A method of forming a hose assembly comprising the steps of:
    providing an inner liner (16) of an organic polymeric material;
    and applying a braided material (18) coated with an organic polymeric solution about the exterior of the inner liner.

14. A method as set forth in claim 13 further characterized by utilizing an organic polymeric solution of a fluorocarbon polymer and water as a solvent.

15. A method as set forth in claim 14 further characterized by removing the water from the solution to leave a fluorocarbon polymer coating (20) about the exterior of the braided material (18).

16. A method as set forth in claim 15 further characterized by sintering the inner liner (16) and braided material (18) to cure the fluorocarbon polymer coating (20).

17. A method as set forth in claim 16 further characterized by utilizing a nonmetallic material for the braided material (18).

18. A method as set forth in claim 17 further characterized by utilizing glass fiber for the nonmetallic braided material (18).

19. A method as set forth in claim 17 further characterized by securing at least one end fitting (14) to the inner liner (16) having the braided material (18) thereabout.

20. A method as set forth in claim 17 further characterized by using a fluorocarbon polymer as the organic polymeric material.

FIG. 1

FIG. 2

FIG. 3